Europäisches Patentamt

European Patent Office

Office européen des brevets

(19)

(11) Publication number: **0 168 369**
**A2**

# (12) EUROPEAN PATENT APPLICATION

(21) Application number: **85850235.4**

(22) Date of filing: **10.07.85**

(51) Int. Cl.⁴: **B 01 D 46/04**

(30) Priority: **11.07.84 SE 8403662**

(43) Date of publication of application:
**15.01.86 Bulletin 86/3**

(84) Designated Contracting States:
**AT BE CH DE FR GB IT LI LU NL SE**

(71) Applicant: **Fläkt AB**
**Box 81001 Sikla Alle 13**
**S-104 81 Stockholm(SE)**

(72) Inventor: **Wilhelmsson, Gunnar**
**Orrvägen 21**
**S-352 41 Växjö(SE)**

(74) Representative: **Lindblom, Erik J.**
**Caroline Östbergs väg 5**
**S-122 35 Enskede(SE)**

(54) A filter arrangement.

(57) A filter arrangement in the form of a hose filter in which a support is inserted into the filter hose to hold the same outwardly tensioned and clamped securely to a perforated plate.

The upper end of the support is of conical configuration, such that the intrinsic weight of the support will generate a gripping force between the filter hose and the hole.

The filter hose (4a) is provided at the upper part thereof with two collars (17,18) and the hole (15a) is intended to co-act with the filter hose between the collars. The support (5a) thus presses the filter firmly against the sides of the holes (15a).

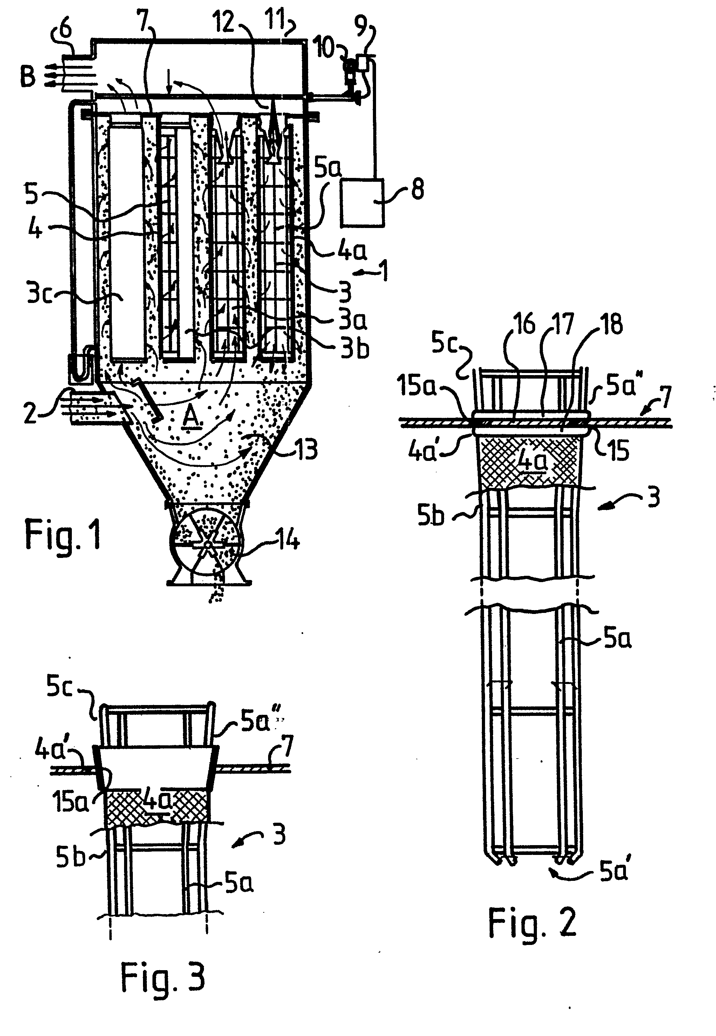

It is suggested that Figure 2 is used with the published Abstract.

Fig. 2

Croydon Printing Company Ltd.

EP 0 168 369 A2

TITLE OF INVENTION:      A  ᵣLTER ARRANGEMENT

TECHNICAL FIELD

The present invention relates to a filter arrangement, and in particular to a filter arrangement of the kind incorporating means for forcing a flow of medium, normally a particle-laden flow of medium, through one or more filter assemblies.

The present invention is based on the conception that each filter assembly comprises an elongated particle-collecting element which co-acts with a support capable of being inserted thereinto, and a holding device adapted to firmly hold the elongated element and the support. The holding device is intended to co-operate with one end part of the elongated element and/or the support.

In filter arrangements of this kind, the holding device normally has the form of a plate or like means having formed therein a hole which is intended to co-act with one end part of the support.

BACKGROUND ART

Such filter arrangements are known in various forms.

Several embodiments of this kind of filter arrangement are known in which the elongated particle-collecting element is held firmly to a holding device, in the form of a plate or like means, in an airtight fashion. An example of one such arrangement for firmly holding the particle-collecting element and a support capable of being inserted thereinto, and a plate-like holding device is described and illustrated in Swedish Published Specification 7500294-9, published under serial number 400 477.

The filter arrangement known from this Swedish Patent Specification incorporates a filter attachment in which one end of a hose filter is intended to be fitted in a pipe stub located in or adjacent to an opening located in one wall of the filter arrangement. To facilitate this attachment, the upper end of the hose filter has a circumferentially extending thickened portion which is intended to be received in a concentrical widened portion located in the aforesaid opening or pipe stub, and an annular device inserted in said filter end is intended to lock said filter end in a sealing fashion.

The filter attachment according to the aforesaid Swedish Patent Specification incorporates an annular device which forms a slidably inserted locking cylinder or the like having a substantial axial extension and presenting abutment means which are effective to restrict the extent of insertion into the upper end of the hose filter. Gripping means are provided for attachment and removal of the cylinder, and the concentric widened portion extending towards the other filter end is restricted by a converging surface and/or is itself convergent. The aforesaid thickened portion is located between the converging, inclined surface and the locking cylinder, and is intended to become sealingly wedged when a tensile load is exerted on the hose filter.

Also known to the art are so-called hose-filter assemblies in which a plurality of particle-collecting elements with associated supports are arranged adjacent one another and capable of being removed from and introduced in a perforated support plate, and in which each hose filter can be removed or fitted as a separate unit.

Also known are filter constructions which have been designated cassette filters in the art and which comprise a plurality of particle-collecting means with associated supports arranged adjacent one another to form a cassette, which can be removed from and inserted into the filter arrangement in the form of a cassette.

The significant feature of the filter arrangement according to the present invention is that it can be used in both hose filters and cassette filters.

## SUMMARY OF THE PRESENT INVENTION

TECHNICAL PROBLEM

With respect to the present state of the art, one technical problem resides in the provision of simple means with which the mutual attachment of the particle-collecting element, the support adapted for insertion thereinto, and the holding device can be effected in a stable and airtight fashion, without needing herefor the provision of complicated attachment and sealing constructions.

A further technical problem associated with filter devices of the aforesaid kind is one of enabling the elongated particle-collecting element to be sealingly connected to the holding device in the absence of more or less complicated clamping joints which in an aggressive atmosphere become the subject of corrosion, the damage caused thereby being liable to cause the particle-collecting element to loosen from the support and the holding device to fall into a particle collecting chamber.

A further technical problem is one of producing a filter arrangement where the mutual attachment of the elongated element, the support, and the holding device can be effected without requiring the use of separate means.

Another technical problem in the present context is one of providing means with which the elongated particle-collecting element and the inserted support can be clamped so firmly to the holding device that the support is stable and that the support and the elongated element are firmly held to the holding device so as not to sway therein as a result of the action of the flowing medium on the elongated element.

Still another technical problem prevailing in such filter arrangements is one of providing an attachment means which is so constructed that vibrations occurring in the elongated particle-collecting element and the support inserted therein afford an additional clamping force between the elongated element and the holding device, therewith to

4

further stabilize automatically the attachment of the support to the holding device.

A further technical problem is one of providing an attachment such that the intrinsic weight of the support and the elongated element will contribute to the clamping force holding the support to the holding device.

A further technical problem is one of providing conditions whereby the elongated particle-collecting element and a support insertable thereinto can be sealingly connected to the holding device, even in the case of minor variations in the dimensions of the support or in the dimensions of the hole formed in the holding device.

A qualified technical problem in this context is one of achieving an attachment between the holding device, the elongated element and the support such that should a device operative to hold or clamp the elongated element to the holding device lose is effectiveness due to corrosion or the like, the element will nevertheless remain firmly clamped between the support and the device.

Finally, a further technical problem is one of providing supports whose external shape enables them to be stacked on top of each other without fastening one within the other, and to which end present a smooth outer surface.

Another technical problem is one of providing supports so shaped as to enable them to be readily transported, and in combination therewith of providing supports which are inexpensive in construction and form, while taking into account the remaining problems in general.

SOLUTION

The present invention relates to a filter arrangement which incorporates means for forcing a flow of medium through one or more filter assemblies, each of which comprises an elongated particle-collecting element arranged to co-act with a support capable of being inserted thereinto, and a holding device which holds the aforesaid element and support and which is adapted to co-act with one end part of said element and said support. In accordance with the invention the holding device comprises a perforated plate or like means adapted to co-act with said one end part of the elongated element and the support.

According to the invention, one end part of the support is widened in relation to the remainder of the support, and the widened support-portion and that edge portion of the hole located in the plate which faces the support and the elongated element are mutually arranged in a manner to produce a clamping force through the intrinsic weight of the support, so that the support is fixed in relation to the plate.

In addition hereto, the upper part of the support has a conical widened portion, such that the support and the elongated element can be arranged to co-act with the hole in said plate at a distance from the upper end of the support. The elongated element and/or the support is, or are, locked to the holding device by a wedging action.

Preferably, a clamping means is arranged to act between the elongated element and the holding device, and the support is arranged to take-over the function of the clamping means automatically should said clamping means become ineffective as a result of corrosion for example.

The elongated element suitably has the form of a textile hose which is closed at one end thereof and which is held firmly by means of a wire cage and a clamping means arranged adjacent the holding device.

For the purpose of holding the elongated particle-collecting element to the support inserted therein and to the holding device, the clamping means is suitably arranged to co-act with the elongated element at a location beneath a collar or a welt, or between two collars or welts, and the clamping means is located in or above the plane of the device.

In accordance with one embodiment, the wire cage has closely packed wires located in the region of its connection with the holding device and the hole located therein, or is provided in said region with a conical band, arranged for co-action with the hole and to sealingly hold the elongated element firmly between the band and said hole. The elongated element shall have a smooth outer surface. The elongated element and/or the support shall be locked to the holding device by a wedging action.

ADVANTAGES

Those advantages primarily characteristic of a filter arrangement according to the invention reside in the possibilities of readily attaching the elongated particle-collecting element and a support, capable of being inserted into the elongated element, firmly to a holding device in the form of a perforated plate, such that the intrinsic weight of the support is able to generate a gripping force for securing the elongated element to the plate. In addition, the securing function of a separate clamping device holding the elongated element to the holding device is automatically taken-over by the support, should this clamping device become ineffective. Finally, the supports have a shape which enables them to be readily stacked and transported.

---------------

The primary characterizing features of a filter arrangement according to the invention are set forth in the characterizing clause of the following Claim 1.

---------------

BRIEF DESCRIPTION OF THE DRAWINGS

An embodiment at present preferred and exhibiting features significant of the present invention will now be described with reference to the accompanying drawing, in which

Figure 1 illustrates in side view and in section a previously known filter arrangement in which filter assemblies according to the present invention can very well be used;

Figure 2 is a side view of a first embodiment of a filter assembly according to the invention, this filter assembly co-acting with a holding device in the form of a perforated plate; and

Figure 3 is a side view of a second embodiment of a filter assembly according to the invention, this filter assembly co-acting with a co-operative device in the form of a perforated plate.

## DESCRIPTION OF PREFERRED EMBODIMENTS

Thus, Fig. 1 illustrates in side view and in section a filter arrangement to which the present invention refers. The illustrated filter arrangement 1 incorporates means (not shown) for urging a medium flow "A", particularly a particle-laden medium flow, through one or more filter assemblies 3, 3a, 3b and 3c, this particle flow "A" passing, via a pipe stub 2, through elongated particle-collecting elements 4 into which supports 5 can be inserted, and passes through said supports to an outlet 6, from where a cleansed medium flow "B" leaves the filter arrangement.

Each filter assembly 3a, 3b and 3c incorporates a particle-collecting element 4, respective elements co-acting with a support 5 capable of being inserted into the element and having the form of wire cage, and a holding device 7 which is adapted to firmly hold the elongated element and the support and which comprises a plate or the like having a hole formed therein adapted to co-operate with one end part of the elongated element and the support.

Since all elongated particle-collecting elements are of identical construction, only the elongated element 3 will be described hereinafter.

When the particle-laden medium flow "A" has passed through the elongated elements and then particularly the elongated element 4a of the filter assembly 3, and the support 5a, the particles are collected outside the element 4a. A valve 9 is manipulated through a control circuit 8, and compressed air is caused to pass through a system of pipes 11, via a compressor 10, this pipe system 11 presenting nozzles or slots through which a jet 12 of air under pressure is caused to pass down the element 4a and the support 5a and to shake-off collected particles, which fall down into a collecting chamber 13, at the lower end of which there is provided a material-removing means 14, which also serves as an airseal.

Fig. 2 illustrates in larger scale, and partly in section, a first embodiment of a filter assembly 3, which incorporates an elongated particle-collecting element 4a, having the form of a textile hose, which co-acts with a support 5a capable of being introduced into said elongated element and having the form of a wire cage or basket. Although only the upper part of the elongated element 4a is shown, it will be understood that in practice said element extends around the support 5a and is closed at the lower part 5a' thereof.

The elongated element 4a and the support 5a are both intended to co-act with a holding device 7, which co-operates with the one end part 4a' of the elongated element and the one end part 4a" of said support.

The holding device 7 comprises a plate or like means having formed therein a hole 15 which co-acts with said one end part 4a' and 5a" of the elongated element and the support respectively.

In accordance with the invention, the one end part 5a" of the support 5a is provided with a portion which is wider than the remainder of the support. This widened or flared portion commences at the reference 5b and terminates at the reference 5c. The widened portion, in the vicinity of the hole 15, and that edge part 15a of the hole 15 in the plate facing the support 5a and the elongated element 4a are mutually so adapted that the weight exerted by the support 5a will generate a gripping force for securing the elongated member 4a to the support 5a, and a holding force for holding the support 5a to the plate 7.

The upper part of the support 5a is preferably of an outwardly flared conical configuration, with a small cone angle. The size of this cone angle is chosen while taking into account the fact that while a small angle will afford the desired gripping force it requires a longer flared portion in order to conform to manufacturing tolerances etc., meaning that an excessive part of the element and support structure will extend above the holding device 7, while a large cone angle will provide a small gripping force but require less of the element and support structure to extend above the device 7.

This cone angle may vary in practice from between 2 and $10^\circ$.

It is also proposed that the support 5a is arranged in a manner which enables it to co-act with the hole 15 in the plate, so that the upper end 5c of the support extends above the holding device 7 through a distance corresponding to less than twice the cross-sectional measurement or diameter of the support in the region of its connection with the holding device 7.

This ensures that a part 5c of the support will extend above the holding device 7, and that the support can be lifted from the hole 15 in the device 7 with the aid of simple means.

The elongated element 4a has the form of a textile hose which is closed at one end and which is held firmly to the support 5a, in the form of a wire cage or basket, by a clamping means 16 sewn into an upper hem or welt in the element 4a. This clamping means is arranged adjacent the holding plate 7. The clamping means may be arranged to co-act with the elongated element 4a at a location beneath a collar or a hem, or between two collars or hems, referenced 17,18.

Fig. 3 illustrates a second embodiment in which the upper conical part of the wire cage or basket 5a is provided with a conical band (not shown) adjacent the holding device 7. The upper part 4a' of the elongated element 4a is provided with a plurality of plies which form a thickening on the edge part 15a against the holding device 7. The edge part 15a may suitably be given a conical configuration, the cone angle of which corresponds to the cone angle of the support 5.

In this way, the intrinsic weight of the support 5a and the elongated element will contribute in creating a sealing pressure and a holding pressure for holding the elongated element 4a sealingly against the holding device 7.

Although not shown, means are provided for holding the elongated element 4a to the holding device 7 and/or to the support 5a, so that it does not fall into the space 13.

The part 5c is smooth and is intended to form a handgrip for lifting the support 5a.

It will be understood that the invention is not restricted to the above described exemplifying embodiments, and that modifications can be carried out within the scope of the following claims.

It is also suggested that the support is arranged to co-act with the hole located in said plate, in a manner such that the upper part of the support is located at a distance from the holding device and there forms a handgrip.

## CLAIMS

1. A filter arrangement incorporating means for urging a flow of medium through one or more filter assemblies, each filter assembly comprising an elongated particle-collecting element (4a) which co-acts with a support (5a) insertable into the elongated element, and a holding device (7) which holds the elongated element and the support and which is intended to co-act with a respective one end part (4a', 5a") of the elongated element and the support, said holding device (7) comprising a plate or the like having formed therein a hole (15) adapted to co-act with the one end part of the elongated element and the support, this co-action between the end parts (4a', 5a") of the elongated element and the support and the sides of the hole (15) being effected through a wedging action, such that a flared part of the support and that edge part (15a) of the hole formed in the plates and facing the elongated element and the support are so adapted in relation to one another that the intrinsic weight of the support (5) generates a gripping force causing the elongated element to be held firmly in relation to the plate (17), characterized in that the upper part (5a") of the support is widened in relation to the remainder of the support (5) along the uppermost region of said support; and in that the widened support portion is given a small angle preferably between 2 and 10°.

2. A filter arrangement according to Claim 1, characterized in that the support is conically flared along its uppermost region (5a").

3. A filter arrangement according to Claim 2, characterized in that the support (5) is arranged to co-act with the hole (15) in said plate in a manner such that the uppermost edge part of the support is located at a distance from the holding device (7) to form a handgrip.

4. A filter arrangement according to Claim 1, characterized in that a clamping means (16) is operative between the elongated element (4a) and the support (5a); and in that the support (5a) is arranged to take-over automatically the function of the clamping means (16) when said means becomes ineffective, as a result of corrosion for example.

5. A filter arrangement according to Claim 1, characterized in that the means (4a) is clamped firmly to the holding device (7) directly through the shape of the support (5a).

6. A filter arrangement according to Claim 1, characterized in that the elongated element has the form of a textile hose which is closed at one end and which is firmly held with the aid of a wire cage and a clamping means arranged adjacent the holding device.

7. A filter arrangement according to Claim 1 or 2, characterized in that the cone angle is chosen so as to create a high holding force and good stabilizing effect between support and holding device, and to create conditions which enable the support to be readily inserted through the elongated element and the holding device.

8. A filter arrangement according to Claim 6, characterized in that the clamping means (16) is arranged to co-act with the elongated element (7) at a location beneath a collar or welt (17,18), or at a location between two collars or welts; and in that the clamping means (16) is located in or above a plane in which the device (7) lies.

9. A filter arrangement according to Claim 1 or 6, characterized in that the wire cage (5a) is provided with a plurality of densely located wires in the region of its connection with the holding device (7) and its hole (15), or the wire cage is provided in said region with a conical band adapted to co-act with the hole and to sealingly hold the elongated element between the band and said hole.

10. A holding arrangement according to Claim 1, characterized in that the flared portion of the elongated element lacks outwardly projection portions and thus has a smooth outer surface.

Fig. 1

Fig. 2

Fig. 3